# FASCICULE DE BREVET EUROPEEN

(11) **EP 1 266 467 B1**
(45) Date de publication et mention de la délivrance du brevet: **29.10.2003**
(21) Numéro de dépôt: 01919542.9
(22) Date de dépôt: 22.03.2001
(51) Int. Cl.: H04B 11/00, G01N 29/00

(54) **INSTALLATION A ELEMENT PIEZOELETRIQUE POUR L'EQUIPEMENT D'UNE STRUCTURE ET ELEMENT PIEZOELECTRIQUE POUR UNE TELLE INSTALLATION**
ANLAGE MIT EINEM PIEZOELEKTRISCHEN ELEMENT FÜR EINE STRUKTUREINRICHTUNG UND PIEZOELEKTRISCHES ELEMENT DAFÜR
INSTALLATION WITH PIEZOELECTRIC ELEMENT FOR EQUIPPING A STRUCTURE AND PIEZOELECTRIC ELEMENT FOR SAME

(30) Priorité: 23.03.2000 FR 0003721
(43) Date de publication de la demande: 18.12.2002
(73) Titulaire: ONERA (Office National d'Etudes et de Recherches Aérospatiales), 92320 Châtillon (FR)
(72) Inventeur: DUPONT, Marc, F-91440 Bures sur Yvette (FR); PERNICE, Marc, F-94260 Fresnes (FR); ROY, Elisabeth, F-91300 Massy (FR)
(74) Mandataire: Bérogin, Francis
(86) Numéro de dépôt international: FR0100867
(87) Numéro de publication internationale: WO01071953

(56) Documents cités:
- WO-A-95/22065
- US-A- 4 380 931
- US-A- 4 779 452

## Description

La présente invention concerne tout d'abord une installation à élément piézoélectrique pour l'émission ou la réception d'ondes ultrasonores dans une structure, par exemple une structure à contrôler, les électrodes de cet élément étant reliées selon le cas à un circuit d'alimentation produisant des signaux électriques d'excitation propres à lui faire émettre des signaux ultrasonores dans ladite structure, ou à un circuit de réception des signaux électriques émis par ledit élément sous l'effet d'une excitation ultrasonore reçue par lui de ladite structure, ledit élément piézoélectrique étant incorporé à la structure.

L'invention concerne également un élément piézoélectrique spécialement conçu pour être utilisé dans une telle installation.

Les structures plus particulièrement intéressées par l'invention seront, sans que cette indication présente aucun caractère limitatif, les structures composites constituées de fibres résistantes imprégnées, par exemple du type carbone-époxy ou verre-résine, utilisées surtout dans la construction des véhicules de transport de tout type (aéronautique, automobile, marine, chemin de fer), du fait qu'elles présentent de bonnes caractéristiques mécaniques et de tenue à la fatigue et à la corrosion, sous un poids relativement faible. Pour satisfaire aux impératifs de sécurité exigés en particulier dans ce domaine de la technique, il est nécessaire d'examiner ces structures régulièrement lors de contrôles systématiques, et même quelquefois en permanence. On tend ainsi à développer des installations comprenant une structure à contrôler et le ou les capteurs de son propre système de contrôle, lesquels sont intégrés, c'est-à-dire incorporés définitivement à la structure, dès la fabrication de cette dernière. Cette technique facilite donc le contrôle des structures intéressées, qui sont équipées, de construction, des capteurs nécessaires à ce contrôle.

Ceci étant, on conçoit que dans de telles installations les éléments incorporés aux structures en question ne devront pas dégrader les propriétés mécaniques de ces structures, et donc être de très faibles dimensions. C'est la raison pour laquelle les éléments les plus appropriés s'avèrent certainement être à l'heure actuelle les éléments piézoélectriques, du type céramique ou analogue, pouvant à la fois être réalisés sous de très faibles encombrements et permettre d'effectuer en permanence ou régulièrement un sondage ultrasonore du matériau de la structure, les défauts internes de celle-ci se traduisant par des modifications des caractéristiques de la transmission du champ de pression dans cette structure, par exemple entre un élément piézoélectrique utilisé comme émetteur d'ultrasons et un autre élément piézoélectrique servant de capteur des ondes ultrasonores émises par l'émetteur; le même élément piézoélectrique peut d'ailleurs servir dans certains cas, à la fois ou en alternance, d'émetteur et de récepteur.

Une telle installation et un tel élément piézoélectrique est divulgué dans le document US4380931

L'intégration de tels éléments piézoélectriques de faibles dimensions aux structures du type évoqué plus haut ne pose pas de problème particulier, que ces structures soient réalisées par empilement de plis préimprégnés et polymérisés à chaud et sous pression, ou qu'elles soient réalisées par moulage et injection sous pression d'une résine incorporant les fibres résistantes.

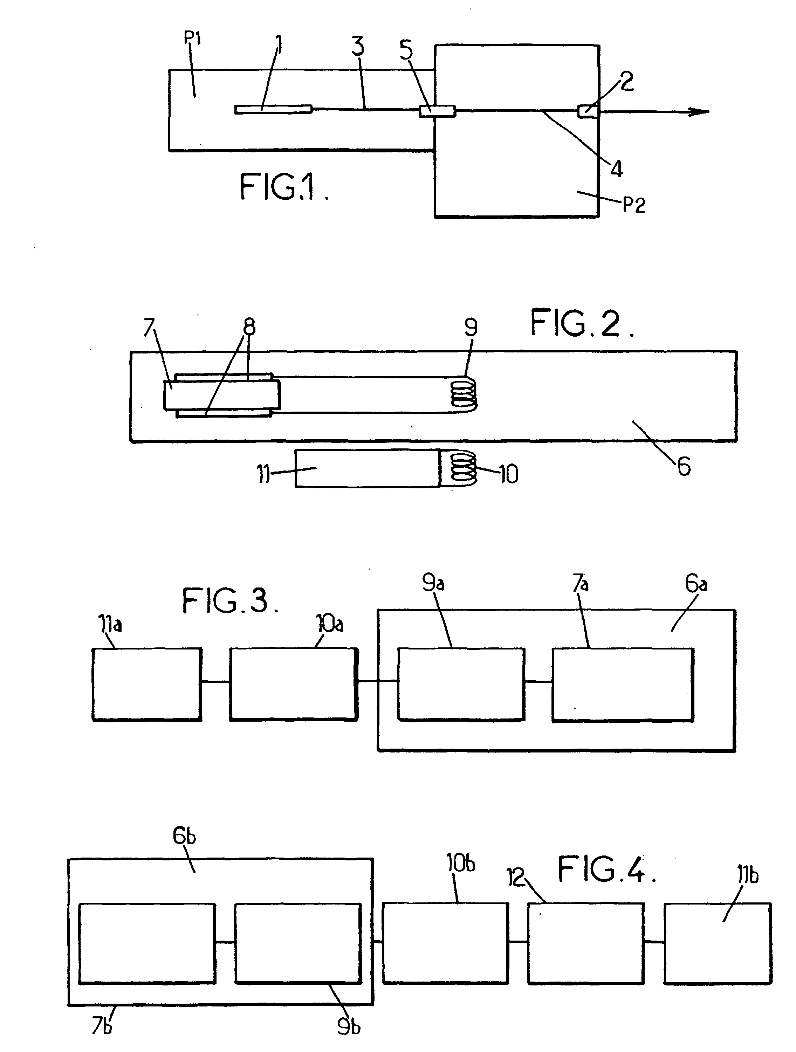

Un problème se pose toutefois au niveau des branchements, surtout dans les structures complexes comprenant plusieurs pièces P1, P2 ... fabriquées séparément puis assemblées, comme ceci a été représenté schématiquement à la figure 1 du dessin ci-annexé. En effet, il convient alors de prévoir des connecteurs aux interfaces entre pièces et au moins à une extrémité de la structure, pour l'entrée et/ou la sortie d'un signal électrique. Sur la figure 1 on a représenté à titre d'exemple une installation comprenant un élément piézoélectrique 1 intégré à la pièce P1 et relié à un connecteur d'entrée et/ou de sortie 2 par des câbles 3, 4 et un connecteur d'interface 5 reliant les deux câbles. On a ainsi une liaison directe avec le dispositif d'alimentation et/ou d'acquisition de données, et cette technique est applicable directement à des études de prototypes en laboratoire, mais ceci avec les inconvénients majeurs suivants : les liaisons par câbles et connecteurs rendent complexe et coûteuse la fabrication de chaque pièce de la structure, ce qui rend cette fabrication peu appropriée aux grandes séries, et l'usinage de la pièce (par exemple découpe des bords) après intégration de l'élément piézoélectrique est impossible.

Le but de la présente invention est de remédier à ces inconvénients de la technique antérieure en s'affranchissant de toute liaison entre éléments piézoélectriques par câbles électriques à l'intérieur de la structure, ou même à l'extérieur de celle-ci, vers les dispositifs d'alimentation et/ou de contrôle et de mesure.

A cet effet, une installation conforme à la présente invention, du type mentionné au début, est caractérisée en ce que les circuits d'alimentation ou de réception de l'élément piézoélectrique sont constitués chacun par une boucle d'induction magnétique également incorporée à la structure et propre à recevoir d'un circuit extérieur, ou respectivement à émettre vers lui, des signaux électromagnétiques.

Avantageusement, la boucle d'induction magnétique est constituée d'une spirale plate de circuit imprimé souple, un repère de positionnement situé en surface de ladite structure étant prévu en vis-à-vis de ladite spirale.

En variante, la boucle d'induction magnétique est constituée d'une spirale plate de circuit imprimé directement gravée sur l'élément piézoélectrique ; elle remplit alors la fonction complémentaire d'électrode de cet élément.

De la sorte, l'ensemble de la pastille piézoélectrique et de la boucle d'induction magnétique peut rester extrêmement plat, n'est pas susceptible de constituer une surépaisseur à la surface de la structure, et ne modifie pas sensiblement les caractéristiques géométriques et mécaniques de cette dernière.

Un élément piézoélectrique et une boucle d'induction magnétique ayant des fonctionnements réversibles, on comprend que l'invention pourra se présenter sous deux familles de concepts différentes, selon que l'élément piézoélectrique est utilisé comme émetteur d'ultrasons ou comme capteur d'ultrasons.

Ainsi une installation conforme à l'invention peut encore être caractérisée soit en ce que ledit circuit extérieur est constitué sous la forme d'un enroulement primaire de transformateur connecté à une source d'alimentation en courant alternatif et couplé par induction à ladite boucle d'induction magnétique constituant le secondaire dudit transformateur, ledit élément piézoélectrique constituant alors une source d'émission d'ondes ultrasonores dans ladite structure, soit en ce que ce circuit extérieur est constitué au contraire sous la forme d'un enroulement secondaire de transformateur connecté à un circuit de traitement du signal et couplé par induction à ladite boucle d'induction magnétique constituant le primaire dudit transformateur, ledit élément piézoélectrique constituant alors un récepteur d'ondes ultrasonores émises dans ladite structure.

Dans ce dernier cas on pourra procéder à une écoute de l'émission acoustique des endommagements éventuels de la structure, de façon en soi connue. Les éléments piézoélectriques se comportent alors comme des récepteurs, dans des gammes de fréquences pouvant être comprises entre 100 kHz et 1 MHz.

L'installation pourra encore être caractérisée en ce qu'elle comporte à la fois les deux types d'éléments piézoélectriques agencés par paires, l'un constituant un émetteur ou récepteur d'ondes ultrasonores, l'autre réciproquement un récepteur ou émetteur, puisque chacun, comme indiqué plus haut, est réversible.

Une installation conforme à l'invention pourra donc être encore caractérisée en ce qu'elle comporte au moins un premier et un ou plusieurs seconds éléments piézoélectriques incorporés dans la structure, le premier étant associé à une boucle d'induction magnétique constituant le secondaire d'un premier transformateur couplé par induction à l'enroulement primaire que constitue un circuit extérieur connecté à une source d'alimentation en courant alternatif, ledit premier élément piézoélectrique constituant alors une source d'émission d'ondes ultrasonores dans ladite structure, et le ou les seconds étant associés chacun à une boucle d'induction magnétique constituant le primaire d'un second transformateur couplé par induction à l'enroulement secondaire que constitue un circuit extérieur connecté à un circuit de traitement du signal, le ou les seconds éléments piézoélectriques constituant alors un ou des récepteurs des ondes ultrasonores émises dans ladite structure par le premier élément piézoélectrique.

Selon encore une autre variante de l'invention, on pourra également utiliser un seul et même élément piézoélectrique comme émetteur d'ondes ultrasonores et comme récepteur, ceci pour mesurer par exemple le temps de parcours d'ondes impulsionnelles émises par cet élément dans la structure, après leur réflexion sur une surface (ou un défaut interne), et retour vers l'élément. On pourra de la sorte mesurer en permanence la vitesse d'érosion d'une surface, par exemple de la surface d'un bouclier thermique en cours d'ablation.

Dans tous les cas, il sera bien entendu avantageux de réaliser aussi les deux dits enroulements sous forme de spirales plates, susceptibles d'être accolées à ladite structure vis-à-vis desdites boucles d'induction magnétique, de sorte que l'on obtient ainsi des transformateurs plats, avec un excellent couplage magnétique.

Avantageusement encore, il peut être prévu qu'un film en matériau magnétique est intercalé entre chaque enroulement extérieur de transformateur et la boucle d'induction magnétique correspondante, incorporée dans ladite structure, ceci pour augmenter encore ce couplage magnétique.

Cependant la transmission de signaux à la boucle d'induction magnétique d'un élément piézoélectrique intégré à une structure peut s'effectuer à distance, sans transformateur, notamment lorsqu'il s'agit de signaux que la nature du contrôle impose d'émettre à haute fréquence, par exemple dans la bande de 50 kHz à 1 MHz pour procéder au contrôle non destructif d'une structure par shearographie. Dans ce cas, une installation conforme à l'invention, du type mentionné au début, se caractérise en ce que la structure, équipée d'au moins un élément piézoélectrique qui lui est incorporé avec sa boucle d'induction magnétique, est associée à une source d'émission de signaux électromagnétiques dans la gamme des fréquences nécessitées par le contrôle non destructif envisagé, et en cas de contrôle par shearographie, à un système optique de visualisation des ondes ultrasonores émises dans la structure, ladite source et ledit système étant situés à distance de ladite structure.

L'invention concerne encore les éléments piézoélectriques eux-mêmes, ainsi que les caractéristiques de forme des boucles d'induction magnétique qui leur sont associées. Ces caractéristiques ainsi que certaines indications dimensionnelles vont être données ci-dessous, en relation avec la description qui suit de certains exemples de réalisation nullement limitatifs, donnés avec référence aux autres figures du dessin, dans lequel :
- la figure 2 représente le schéma de principe d'une liaison par couplage magnétique entre un enroulement extérieur et un élément piézoélectrique incorporé à une structure en matériau composite;
- la figure 3 représente la configuration de principe pour la génération d'ultrasons dans une structure;
- la figure 4 représente la configuration de principe pour la détection d'ultrasons émis dans une structure;
- la figure 5 représente la configuration de principe d'une structure équipée à la fois d'éléments piézoélectriques émetteurs d'ultrasons et d'éléments piézoélectriques récepteurs;
- la figure 6 représente la mise en oeuvre de l'invention pour la mesure de la vitesse d'ablation de la surface d'une structure; et
- la figure 7 est un schéma d'une installation pour l'émission d'ondes électromagnétiques dans une structure équipée conformément à l'invention, cette installation permettant un contrôle à distance et non destructif de cette structure par shearographie.

Dans la figure 2 la structure composite est référencée 6 et incorpore de fabrication, selon l'un des procédés indiqués plus haut, un élément piézoélectrique mince 7 dont les électrodes 8 sont reliées aux extrémités d'une boucle d'induction magnétique 9 également incorporée à la structure et avantageusement conformée en spirale plate. Cette boucle est accouplée par induction magnétique à l'enroulement plat 10 d'un transformateur connecté à un circuit électronique 11, cet enroulement étant accolé de façon provisoire ou définitive à la structure 6 vis-à-vis la boucle 9. Le circuit 11 peut être constitué d'une source d'alimentation en courant alternatif, auquel cas l'enroulement 10 est à considérer comme le primaire d'un transformateur dont le secondaire est constitué par ladite boucle 9, l'élément piézoélectrique 7 étant alors un dispositif émetteur d'ultrasons dans la structure 6. Il peut s'agir aussi d'un circuit amplificateur des signaux reçus, auquel cas l'enroulement 10 est à considérer comme le secondaire d'un transformateur dont le primaire est constitué par la boucle 9, l'élément piézoélectrique étant alors un dispositif récepteur d'ultrasons émis dans ladite structure 6.

On obtient ainsi un élément miniature facilement intégrable à toute structure résistante et permettant de transmettre à un circuit extérieur, ou d'en recevoir, tout signal utile au contrôle permanent ou systématique de cette structure. A titre indicatif, la boucle d'induction magnétique peut être réalisée en couche mince du type circuit imprimé souple, d'une épaisseur de 50 à 100 µm, et l'élément piézoélectrique, qui peut être disposé au centre de la spirale de la boucle 9, peut se présenter sous la forme d'une pastille d'une épaisseur de l'ordre de 100 µm. On a par exemple réalisé un prototype intégré dans deux plaques d'un matériau composite carbone-époxy de 4 mm d'épaisseur. L'élément piézoélectrique 7 avait un diamètre de 5 mm et une épaisseur de 100 µm. La boucle en spirale 9 comportait deux spirales superposées de 18 tours chacune, de 25 mm de diamètre extérieur et 10 mm de diamètre intérieur, portées par deux films de Kapton.

Quant au calcul du transformateur, mettant éventuellement en oeuvre des matériaux magnétiques, il ne fait appel qu'aux connaissances courantes en la matière, et n'a pas besoin d'être détaillé ici. Il est à noter cependant qu'il sera avantageux de prévoir également des enroulements 10 ou analogues en forme de doubles spirales plates bobinées de sorte à ce que leurs flux s'additionnent et à une distance très faible l'une de l'autre (de l'ordre de 0,1 mm); chaque spirale peut comporter par exemple 17 tours et avoir une épaisseur de 18 µm.

Le couplage magnétique dans les transformateurs ainsi constitués est fonction de la distance entre les boucles et les enroulements pour une géométrie donnée, et l'on peut admettre que les pertes de flux capté sont négligeables pour une distance inférieure à 2 mm; au delà, on tient compte de l'atténuation. En ce qui concerne la transparence magnétique des matériaux, il est à noter qu'elle est fonction de leur conductivité électrique et de leur épaisseur. Tous les diélectriques ont une bonne transparence magnétique dans un domaine de fréquence allant jusqu'à 10 MHz.

A la figure 3 on a représenté une autre installation conforme à l'invention, comportant une structure composite 6a intégrant un élément piézoélectrique 7a destiné à engendrer des ultrasons dans la structure et dont la boucle d'induction magnétique 9a est donc établie en tant que secondaire d'un transformateur dont l'enroulement primaire 10a, accolé à la boucle, est branché sur une source d'alimentation en courant à fréquence variable 11a.

Avec une technologie analogue, on a représenté à la figure 4 encore une autre installation conforme à l'invention, comportant une structure composite 6b intégrant un élément piézoélectrique 7b destiné à constituer un récepteur d'ultrasons émis dans la structure et dont la boucle d'induction magnétique 9b, reliée aux électrodes de l'élément, est donc établie en tant que primaire d'un transformateur dont l'enroulement secondaire 10b, accolé à la boucle, est branché sur un circuit de traitement de signal 11b par l'intermédiaire d'un ensemble amplificateur et filtre 12.

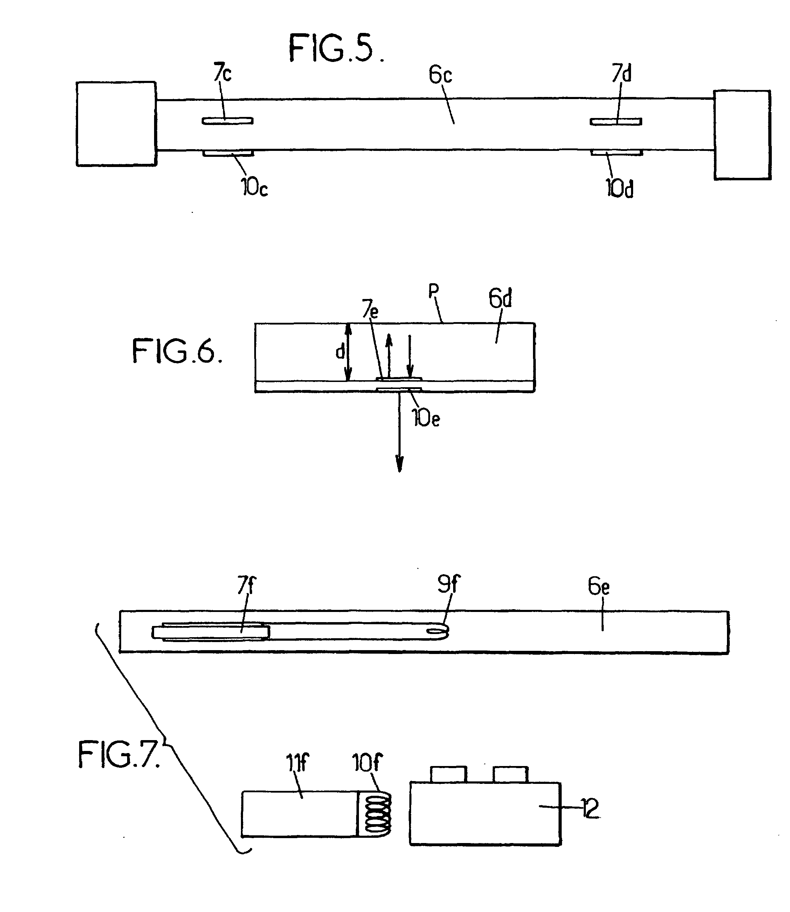

A la figure 5 on a représenté une installation comportant une structure en matériau composite 6c dans laquelle sont intégrés deux éléments piézoélectriques 7c et 7d pouvant l'un et l'autre fonctionner en émetteur ou en récepteur d'ultrasons (le dessin étant simplifié, on n'a pas représenté les boucles d'induction magnétique associées à ces éléments). Les enroulements correspondants des transformateurs ont été représentés ici, également de façon schématique, en 10c et 10d. Ces transformateurs peuvent être utilisés en émission de signaux électriques ou en réception, selon que l'élément piézoélectrique 7c ou 7d associé est destiné à émettre ou à recevoir des ultrasons.

A la figure 6 on a représenté une installation mise en oeuvre sur une structure 6d susceptible de voir son épaisseur varier par exemple à diminuer par ablation ou usure ou à augmenter, par exemple par accrétion de givre. Cette structure est équipée d'un élément piézoélectrique à la fois émetteur et récepteur d'ultrasons 7e couplé par induction magnétique à un enroulement de circuit extérieur 10e connecté à un système de mesure et d'alimentation en courant impulsionnel, à une fréquence de quelques centaine de kHz. Les impulsions ultrasonores émises par l'élément 7e vers la paroi P subissant la variation d'épaisseur sont réfléchies sur cette paroi et reçues par l'élément 7e avec un temps de retard qui fournira ainsi, avantageusement en permanence, la mesure de la variation d'épaisseur de la structure.

Enfin on a représenté à la figure 7 une autre installation conforme à l'invention, dans laquelle la structure 6e, équipée d'au moins un élément piézoélectrique 7f qui lui est incorporé avec sa boucle d'induction magnétique 9f, est associée à une source 10f, 11f d'émission de signaux électromagnétiques dans la gamme des fréquences nécessitées par le contrôle non destructif envisagé, et en cas de contrôle par shearographie, à un système optique 12 de visualisation des ondes ultrasonores émises dans la structure par l'élément 7f, ladite source 10f, 11f et ledit système 12 étant situés à distance de ladite structure 6e. Ce principe de contrôle peut s'appliquer à tous les cas dans lesquels il est nécessaire d'avoir une sollicitation mécanique à haute fréquence, comme dans le cas de la shearographie. Bien entendu, la puissance de la source d'émission 10f, 11f devra être suffisante pour exciter l'élément piézoélectrique 7f grâce au flux magnétique développé à distance dans sa boucle 9f, de sorte qu'il émette des ultrasons dans la structure; la visualisation à distance, par le système 12, des ondes ultrasonores dans la structure 6e, donnera des informations sur son éventuel endommagement.

Dans les exemples qui précèdent on a supposé que la structure était une structure à contrôler, mais l'invention ne se limite pas toujours à cette application. Il pourrait s'agir d'une structure quelconque, par exemple une structure ne servant que de milieu de transition pour la transmission de données entre deux autres structures ou appareils.

Il y a lieu de noter également que toute combinaison d'éléments piézoélectriques dans la structure est envisageable, par exemple plusieurs récepteurs piézoélectriques pour recevoir les signaux d'un seul élément émetteur ou inversement, comme ceci a déjà été mentionné plus haut.

## Revendications

1. Installation à élément piézoélectrique pour l'émission ou la réception d'ondes ultrasonores dans une structure, les électrodes de cet élément étant reliées selon le cas à un circuit d'alimentation produisant des signaux électriques d'excitation propres à lui faire émettre des signaux ultrasonores dans ladite structure, ou à un circuit de réception des signaux électriques émis par ledit élément sous l'effet d'une excitation ultrasonore reçue par lui de ladite structure, ledit élément piézoélectrique étant incorporé à la structure, **caractérisée en ce que** lesdits circuits d'alimentation ou de réception de cet élément piézoélectrique (7) sont constitués chacun par une boucle d'induction magnétique (9) également incorporée à la structure (6) et propre à recevoir d'un circuit extérieur (10, 11), ou respectivement à émettre vers lui, des signaux électromagnétiques.

2. Installation selon la revendication 1, **caractérisée en ce que** ladite boucle d'induction magnétique (9) est constituée d'une spirale plate de circuit imprimé souple, un repère de positionnement situé en surface de ladite structure (6) étant prévu en vis-à-vis de ladite spirale.

3. Installation selon la revendication 1, **caractérisée en ce que** ladite boucle d'induction magnétique (9) est constituée d'une spirale plate de circuit imprimé directement gravée sur l'élément piézoélectrique.

4. Installation selon la revendication 1, 2 ou 3, **caractérisée en ce que** ledit circuit extérieur est constitué sous la forme d'un enroulement primaire (10a) de transformateur connecté à une source d'alimentation en courant alternatif (11a) et couplé par induction à ladite boucle d'induction magnétique (9a) constituant le secondaire dudit transformateur, ledit élément piézoélectrique (7a) constituant alors une source d'émission d'ondes ultrasonores dans ladite structure (6a).

5. Installation selon la revendication 1 ou 2, **caractérisée en ce que** ledit circuit extérieur est constitué sous la forme d'un enroulement secondaire (10b) de transformateur connecté à un circuit de traitement du signal (11b, 12) et couplé par induction à ladite boucle d'induction magnétique (9b) constituant le primaire dudit transformateur, ledit élément piézoélectrique (7b) constituant alors un récepteur d'ondes ultrasonores émises dans ladite structure.

6. Installation selon la revendication 1 ou 2, **caractérisée en ce qu'**elle comporte au moins un premier (7c) et un ou plusieurs seconds (7d) éléments piézoélectriques incorporés dans la structure (6c), le premier (7c) étant associé à une boucle d'induction magnétique constituant le secondaire d'un premier transformateur couplé par induction à l'enroulement primaire (10c) que constitue un circuit extérieur connecté à une source d'alimentation en courant alternatif, ledit premier élément piézoélectrique (7c) constituant alors une source d'émission d'ondes ultrasonores dans ladite structure (6c), et le ou les seconds (7d), situés à distance du premier, étant associés chacun à une boucle d'induction magnétique constituant le primaire d'un second transformateur couplé par induction à l'enroulement secondaire (10d) que constitue un circuit extérieur connecté à un circuit de traitement du signal, le ou lesdits seconds éléments piézoélectriques (7d) constituant alors un ou des récepteurs des ondes ultrasonores émises dans ladite structure (6c) à contrôler par le premier élément piézoélectrique (7c).

7. Installation selon la revendication 1 ou 2, **caractérisée en ce qu'**elle comporte, incorporé à ladite structure (6d), un seul et même élément piézoélectrique (7e) comme émetteur d'ondes ultrasonores et comme récepteur, pour la mesure du temps de parcours d'ondes impulsionnelles émises par cet élément dans la structure, après leur réflexion sur une surface (P) ou un défaut interne, et retour vers l'élément (7e).

8. Installation selon l'une quelconque des revendications 3 à 7, **caractérisée en ce que** lesdits enroulements (10) sont réalisés également sous forme de spirales plates, accolées à ladite structure (6) vis-à-vis desdites boucles d'induction magnétique correspondantes.

9. Installation selon l'une quelconque des revendications 3 à 8, **caractérisée en ce qu'**un film en matériau magnétique est intercalé entre chaque enroulement extérieur (10) de transformateur et la boucle d'induction magnétique correspondante (9), incorporée à ladite structure (6).

10. Installation selon la revendication 1, 2 ou 3, **caractérisée en ce que** la structure, équipée d'au moins un élément piézoélectrique qui lui est incorporé avec sa boucle d'induction magnétique, est associée à une source d'émission de signaux électromagnétiques dans la gamme des fréquences nécessitées par un contrôle non destructif, et à un système optique de visualisation des ondes ultrasonores émises dans la structure, ladite source et ledit système étant situés à distance de ladite structure.

11. Installation selon l'une quelconque des revendications précédentes, **caractérisée en ce que** ladite structure est une structure à contrôler.

12. Elément piézoélectrique pour une installation conforme à l'une quelconque des revendications précédentes, **caractérisé en ce qu'**il est connecté à une boucle d'induction magnétique (9) se présentant sous la forme d'une spirale plate à plusieurs enroulements, de type circuit imprimé.

13. Elément piézoélectrique selon la revendication 12, **caractérisé en ce qu'**il est disposé au centre de ladite spirale et se présente sous la forme d'une pastille mince.

## Patentansprüche

1. Anlage mit piezoelektrischem Element für die Ausstrahlung oder den Empfang von Ultraschallwellen in einem Aufbau, wobei die Elektroden dieses Elementes fallweise an eine Speiseschaltung, die elektrische Anregungssignale erzeugt, die geeignet sind, es Ultraschallsignale in den Aufbau ausstrahlen zu lassen, oder an eine Schaltung zum Empfang der elektrischen Signale angeschlossen sind, die vom genannten Element unter der Einwirkung einer Ultraschallerregung ausgesendet werden, die von ihm vom genannten Aufbau empfangen wird, wobei das piezoelektrische Element in den Aufbau eingebaut ist, **dadurch gekennzeichnet, dass** die Speise- oder die Empfangsschaltung dieses piezoelektrischen Elementes (7) jeweils durch eine magnetische Induktionsschleife (9) gebildet ist, die auch in den Aufbau (6) eingebaut und geeignet ist, von einer äußeren Schaltung (10, 11) elektromagnetische Signale zu empfangen bzw. zu ihr hin auszusenden.

2. Anlage nach Anspruch 1, **dadurch gekennzeichnet, dass** die magnetische Induktionsschleife (9) aus einer flachen Spirale in biegsamer gedruckter Schaltungstechnik gebildet ist, wobei eine an der Oberfläche des Aufbaus (6) gelegene Positionsmarkierung gegenüberliegend zur Spirale vorgesehen ist.

3. Anlage nach Anspruch 1, **dadurch gekennzeichnet, dass** die magnetische Induktionsschleife (9) aus einer direkt auf das piezoelektrische Element gravierten, flachen Spirale in gedruckter Schaltungstechnik gebildet ist.

4. Anlage nach Anspruch 1, 2 oder 3, **dadurch gekennzeichnet, dass** die äußere Schaltung in Form einer Transformator-Primärwicklung (10a) ausgebildet ist, die an eine Wechselstrom-Speisequelle (11a) angeschlossen und durch Induktion an die die Sekundärseite des Transformators bildende magnetische Induktionsschleife (9a) angekoppelt ist, wobei das piezoelektrische Element (7a) dann eine Strahlungsquelle von Ultraschallwellen im Aufbau (6a) bildet.

5. Anlage nach Anspruch 1 oder 2, **dadurch gekennzeichnet, dass** die äußere Schaltung in Form einer Transformator-Sekundärwicklung (10b) ausgebildet ist, die an eine Signalverarbeitungsschaltung (11b, 12) angeschlossen und durch Induktion an die die Primärseite des Transformators bildende magnetische Induktionsschleife (9b) angekoppelt ist, wobei das piezoelektrische Element (7b) dann einen Empfänger von im Aufbau ausgestrahlten Ultraschallwellen bildet.

6. Anlage nach Anspruch 1 oder 2, **dadurch gekennzeichnet, dass** sie wenigstens ein erstes (7c) und ein oder mehrere zweite (7d) piezoelektrische Elemente umfasst, die im Aufbau (6c) eingebaut sind, wobei das erste (7c) einer magnetischen Induktionsschleife zugeordnet ist, welche die Sekundärseite eines ersten Transformators bildet, die durch Induktion an die Primärwicklung (10c) angekoppelt ist, welche durch eine äußere Schaltung gebildet ist, die an eine Wechselstrom-Speisequelle angeschlossen ist, wobei das erste piezoelektrische Element (7c) dann eine Strahlungsquelle von Ultraschallwellen im Aufbau (6c) bildet, und das oder die zweiten (7d) Elemente, die mit Abstand zum ersten angeordnet sind, jeweils einer magnetischen Induktionsschleife zugeordnet sind, welche die Primärseite eines zweiten Transformators bildet, der durch Induktion an die Sekundärwicklung (10d) angekoppelt ist, welche durch eine äußere Schaltung gebildet ist, die an eine Signalverarbeitungsschaltung angeschlossen ist, wobei das oder die zweiten piezoelektrischen Elemente (7d) dann einen Empfänger oder Empfänger der Ultraschallwellen bilden, welche durch das erste piezoelektrische Element (7c) im zu kontrollierenden Aufbau (6c) ausgestrahlt werden.

7. Anlage nach Anspruch 1 oder 2, **dadurch gekennzeichnet, dass** sie, eingebaut in den Aufbau (6d), ein und dasselbe piezoelektrische Element (7e) als Sender von Ultraschallwellen und als Empfänger für die Messung der Laufzeit von durch dieses Element im Aufbau ausgestrahlten, impulsartigen Wellen nach ihrer Reflexion an einer Oberfläche (P) oder einer inneren Störstelle und Rücklauf zum Element (7e) enthält.

8. Anlage nach einem der Ansprüche 3 bis 7, **dadurch gekennzeichnet, dass** die Wicklungen (10) auch in Form von flachen Spiralen ausgeführt sind, die an den Aufbau (6) gegenüberliegend zu den entsprechenden magnetischen Induktionsschleifen angebaut sind.

9. Anlage nach einem der Ansprüche 3 bis 8, **dadurch gekennzeichnet, dass** eine Folie aus magnetischem Material zwischen jeder äußeren Transformatorwicklung (10) und der entsprechenden im Aufbau (6) eingebauten, magnetischen Induktionsschleife (9) zwischengelegt ist.

10. Anlage nach Anspruch 1, 2 oder 3, **dadurch gekennzeichnet, dass** der Aufbau, der mit wenigstens einem piezoelektrischen Element ausgestattet ist, das in ihm mit seiner magnetischen Induktionsschleife eingebaut ist, mit einer Strahlungsquelle elektromagnetischer Signale in dem Bereich der Frequenzen, die für eine zerstörungsfreie Kontrolle erforderlich sind, und mit einem optischen System zur Visualisierung der im Aufbau ausgestrahlten Ultraschallwellen verbunden ist, wobei diese Quelle und dieses System mit Abstand zum Aufbau angeordnet sind.

11. Anlage nach einem der vorhergehenden Ansprüche, **dadurch gekennzeichnet, dass** der Aufbau ein zu kontrollierender Aufbau ist.

12. Piezoelektrisches Element für eine Anlage gemäß einem der vorhergehenden Ansprüche, **dadurch gekennzeichnet, dass** es an eine magnetische Induktionsschleife (9) angeschlossen ist, welche die Form einer flachen Spirale mit mehreren Windungen in gedruckter Schaltungstechnik aufweist.

13. Piezoelektrisches Element nach Anspruch 12, **dadurch gekennzeichnet, dass** es in der Mitte der Spirale angeordnet ist und die Form einer dünnen Pille aufweist.

## Claims

1. Installation with a piezoelectric element for transmitting or receiving ultrasonic waves in a structure, the electrodes of this element being connected, depending on the circumstances, to a power supply circuit producing electrical excitation signals capable of inducing it to transmit ultrasonic signals in said structure, or to a circuit for receiving electrical signals transmitted by said element as a result of an ultrasonic excitation it receives from said structure, said piezoelectric element being incorporated into said structure, **characterized in that** said power supply or receiving circuits of this piezoelectric element (7) are each constituted by a magnetic induction loop (9), also incorporated into the structure (6) and capable of receiving from an external circuit (10, 11), or respectively of transmitting to it, electromagnetic signals.

2. Installation according to claim 1, **characterized in that** said magnetic induction loop (9) is constituted by a flat spiral of a flexible printed circuit, a positioning mark located on the surface of said structure (6) being provided next to said spiral.

3. Installation according to claim 1, **characterized in that** said magnetic induction loop (9) is constituted by a flat spiral of a printed circuit etched directly onto the piezoelectric element.

4. Installation according to claim 1, 2 or 3, **characterized in that** said external circuit is constituted in the form of a primary winding (10a) of a transformer connected to an alternating current supply source (11a) and induction-coupled to said magnetic induction loop (9a) constituting the secondary of said transformer, said piezoelectric element (7a) in this case constituting a transmission source for ultrasonic waves in said structure (6a).

5. Installation according to claim 1 or 2, **characterized in that** said external circuit is constituted in the form of a secondary winding (10b) of a transformer connected to a circuit for processing the signal (11b, 12) and induction-coupled to said magnetic induction loop (9b) constituting the primary of said transformer, said piezoelectric element (7b) in this case constituting a receiver of ultrasonic waves transmitted in said structure.

6. Installation according to claim 1 or 2, **characterized in that** it comprises at least one first (7c) and one or more second (7d) piezoelectric elements incorporated into the structure (6c), the first element (7c) being associated with a magnetic induction loop constituting the secondary of a first transformer induction-coupled to the primary winding (10c) constituted by an external circuit connected to an alternating current supply source, said first piezoelectric element (7c) in this case constituting a transmission source for ultrasonic waves in said structure (6c), and the second element or elements (7d), located at a distance from the first, each being associated with a magnetic induction loop constituting the primary of a second transformer induction-coupled to the secondary winding (10d) constituted by an external circuit connected to a circuit for processing the signal, said second piezoelectric element or elements (7d) in this case constituting one or more receivers of the ultrasonic waves transmitted in this structure (6c) to be inspected by the first piezoelectric element (7c).

7. Installation according to claim 1 or 2, **characterized in that** it comprises, incorporated into said structure (6d), one and the same piezoelectric element (7e) as an ultrasonic wave transmitter and as a receiver, for measuring the travel time of impulse waves transmitted by this element in the structure, from their reflection on a surface (P) or an internal defect, and their return to the element (7e).

8. Installation according to any of claims 3 through 7, **characterized in that** said windings (10) are also produced in the form of flat spirals, attached to said structure (6) next to said corresponding magnetic induction loops.

9. Installation according to any of claims 3 through 8 **characterized in that** a film of magnetic material is intercalated between each external transformer winding (10) and the corresponding magnetic induction loop (9), incorporated into said structure (6).

10. Installation according to claim 1, 2 or 3, **characterized in that** the structure, equipped with at least one piezoelectric element that is incorporated into it with its magnetic induction loop, is associated with a transmission source for electromagnetic signals in the frequency range required by a non-destructive inspection, and with an optical system for displaying the ultrasonic waves transmitted in the structure, said source and said system being located at a distance from said structure.

11. Installation according to any of the preceding claims, **characterized in that** said structure is a structure to be inspected.

12. Piezoelectric element for an installation according to any of the preceding claims, **characterized in that** it is connected to a magnetic induction loop (9) occurring in the form of a flat spiral with several windings, of the printed circuit type.

13. Piezoelectric element according to claim 12, **characterized in that** it is disposed at the center of said spiral and occurs in the form of a thin wafer.
